# EUROPÄISCHE PATENTSCHRIFT

(11) **EP 3 404 294 B1**
(45) Veröffentlichungstag und Bekanntmachung des Hinweises auf die Patenterteilung: **10.03.2021**
(21) Anmeldenummer: 18172978.1
(22) Anmeldetag: 17.05.2018
(51) Int. Cl.: F16H 57/08, F16H 1/28, F16C 17/02, F03D 15/00

(54) **GETRIEBE INSBESONDERE FUER WINDKRAFTGENERATOREN**
TRANSMISSION IN PARTICULAR FOR WIND POWER GENERATORS
ENGRENAGE, EN PARTICULIER POUR GÉNÉRATEURS ÉOLIENS

(30) Priorität: 19.05.2017 DE 102017110966
(43) Veröffentlichungstag der Anmeldung: 21.11.2018
(73) Patentinhaber: Renk Aktiengesellschaft, 86159 Augsburg (DE)
(72) Erfinder: Potthoff, Markus, 48493 Wettringen (DE); Böckemeyer, Andreas, 49477 Ibbenbüren (DE)
(74) Vertreter: Schlosser, Stefan

(56) Entgegenhaltungen:
- EP-A1- 2 980 427
- WO-A2-2009/141140
- DE-B3-102015 201 248
- GB-A- 612 883

## Beschreibung

Die Erfindung betrifft ein Getriebe insbesondere für Windkraftgeneratoren. So ein Getriebe ist aus der DE102015201248B bekannt.

Aus der DE 100 43 593 B4 sowie aus der DE 199 17 605 B4 sind jeweils Getriebe für Windkraftgeneratoren mit Planetengetriebeanordnungen bekannt. Die aus diesem Stand der Technik bekannten Getriebe verfügen jeweils über eine als Stufenplanetengetriebenanordnung ausgebildete Planetengetriebeanordnung mit einem Sonnenrad, mit einem Hohlrad sowie mit mehreren Planetenrädern. Erste Planetenräder stehen mit dem Hohlrad und zweite Planetenräder mit dem Sonnenrad in Eingriff.

Hiervon ausgehend liegt der vorliegenden Erfindung die Aufgabe zugrunde, ein neuartiges Getriebe für insbesondere Windkraftgeneratoren zu schaffen. Diese Aufgabe wird durch ein Getriebe nach Anspruch 1 gelöst.

Das erfindungsgemäße Getriebe nutzt keine Stufenplanetengetriebeanordnung, sondern vielmehr eine Umlaufplanetengetriebeanordnung. Bei einer solchen Umlaufplanetengetriebeanordnung steht die Planetenradverzahnung jedes Planetenrads einerseits mit der Hohlradverzahnung des Hohlrads und andererseits mit der Sonnenradverzahnung des Sonnenrad in Eingriff, wobei die Planetenräder auf mit dem Planetenträger drehfest verbundenen Planetenbolzen über Radialgleitlager gelagert sind.

Die Radialgleitlager verfügen über Lagernaben, die zwischen dem jeweiligen Planetenbolzen und dem jeweiligen Planetenrad positioniert sind und die mit dem Planetenbolzen, der seinerseits mit dem Planetenträger drehfest verbunden ist, drehfest verbunden sind.

Bei dem erfindungsgemäßen Getriebe ist zwischen der jeweiligen Lagernabe des jeweiligen Radialgleitlagers und dem jeweiligen Planetenbolzen eine ringförmige Abstützung ausgebildet. Diese ringförmige Abstützung weist in Axialrichtung gesehen eine geringere Abmessung als die jeweilige Lagernabe des jeweiligen Radialgleitlagers und/oder eine geringe Abmessung als die Planetenradverzahnung des jeweiligen Planetenrads auf.

Die jeweilige Lagernabe kann sich in Radialrichtung in denjenigen Bereichen, in welchen die ringförmige Abstützung nicht ausgebildet ist, elastisch verformen. Hierdurch kann gewährleistet werden, dass unter Belastung die in Eingriff stehenden Verzahnungen optimal aneinander anliegen und somit die Lastverteilung in den Zahneingriffen optimiert wird. Im jeweiligen Radialgleitlager wird ein sogenanntes Kantentragen vermieden. Eine Korrektur der Mikrogeometrie der Verzahnung von Planetenrädern, Sonne und/oder Hohlrad bzw. der die Planetenräder lagernden Radialgleitlager kann hierdurch erheblich reduziert oder vermieden werden.

Nach einer vorteilhaften Weiterbildung ist die ringförmige Abstützung bezogen auf die axiale Abmessung der jeweiligen Lagernabe und/oder die axiale Abmessung der Planetenradverzahnung des jeweiligen Planetenrads außermittig ausgebildet. Eine in Axialrichtung gesehen außermittige Anordnung der ringförmigen Abstützung ist zur Optimierung der Lastverteilung in den im Eingriff stehenden Verzahnungen und in dem Radialgleitlagern besonders bevorzugt.

Nach einer vorteilhaften Weiterbildung ist die ringförmige Abstützung durch einen in Umfangsrichtung umlaufenden Vorsprung der jeweiligen Lagernabe, der sich am jeweiligen Planetenbolzen abstützt, und/oder durch einen in Umfangsrichtung umlaufenden Vorsprung des jeweiligen Planetenbolzens ausgebildet, der sich an der jeweiligen Lagernabe abstützt, ausgebildet. Diese Ausbildung der ringförmigen Abstützung ist einfach und erlaubt eine vorteilhafte Montage.

Nach einer vorteilhaften Weiterbildung ist zwischen der jeweiligen Lagernabe und dem jeweiligen Planetenrad eine Schwimmbuchse positioniert, die gegenüber der jeweiligen Lagernabe und dem jeweiligen Planetenrad drehbeweglich ist. Alternativ oder zusätzlich ist zwischen der jeweiligen Lagernabe und dem jeweiligen Planetenrad eine Gleitlagerbuchse positioniert, die entweder der jeweiligen Lagernabe oder mit jeweiligen Planetenrad drehfest verbunden ist. Die Gleitlagerbuchse kann vorzugsweise eine Beschichtung der Lagernabe mit einem Gleitlagerwerkstoff ersetzen.

Nach einer vorteilhaften Weiterbildung ist in den jeweiligen Planetenbolzen mindestens eine sich in Axialrichtung erstreckende Ausnehmung eingebracht. Über die sich in Axialrichtung erstreckende Ausnehmung des jeweiligen Planetenbolzens kann der Planetenbolzen leichter und nachgiebiger ausgeführt werden, ferner kann über die Ausnehmung die Ölversorgung des jeweiligen Radialgleitlagers erfolgen.

Nach einer vorteilhaften Weiterbildung sind Axiallager zur axialen Lagerung des jeweiligen Planetenrads auf der jeweiligen Lagernabe vorhanden. Durch die Axiallager können die Planetenräder auf den jeweiligen Planetenbolzen axial geführt werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: ein Detail eines ersten erfindungsgemäßen Getriebes;
- Fig. 2:: ein Detail eines zweiten erfindungsgemäßen Getriebes;
- Fig. 3:: ein Detail eines dritten erfindungsgemäßen Getriebes;
- Fig. 4;: ein Detail eines vierten erfindungsgemäßen Getriebes;
- Fig. 5:: ein Detail eines fünften erfindungsgemäßen Getriebes;
- Fig. 6:: ein Detail eines sechsten erfindungsgemäßen Getriebes; und
- Fig. 7:: eine Umlaufplanetengetriebeanordnung.

Die Erfindung betrifft ein Getriebe für insbesondere Windkraftgeneratoren. Vorzugsweise handelt es sich beim erfindungsgemäßen Getriebe nämlich um ein Windkraftgeneratorgetriebe.

Das erfindungsgemäße Getriebe weist eine Planetengetriebeanordnung auf, die als Umlaufplanetengetriebeanordnung 1 ausgebildet ist.

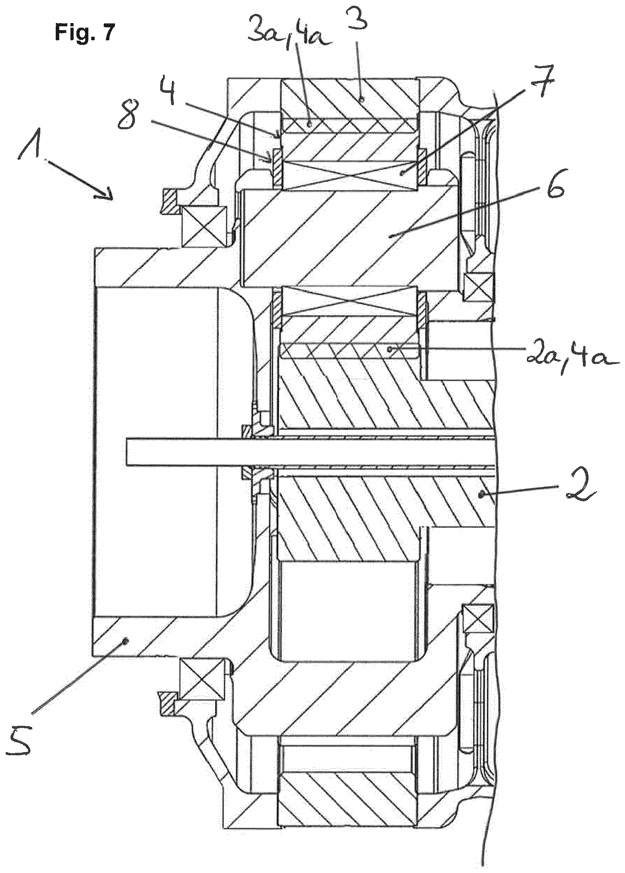

Die Umlaufplanetengetriebeanordnung 1 (siehe Fig. 7) verfügt über ein Sonnenrad 2, ein Hohlrad 3 sowie mehrere Planetenräder 4, wobei die Planetenräder 4 an einem Planetenträger 5 über Planetenbolzen 6 aufgenommen sind.

Bei einer Umlaufplanetengetriebeanordnung 1 ist das Hohlrad 3 vorzugsweise feststehend, der Planetenträger 5 ist vorzugsweise angetrieben und gegenüber einem Gehäuse 19 drehbar. Der Planetenträger 5, die Planetenräder 4 sowie Sonnenrad 2 rotieren demnach vorzugsweise relativ zum feststehenden Hohlrad 3 und feststehenden Gehäuse 19.

Die Planetenräder 4 sind auf den Planetenbolzen 6 gelagert, die mit dem Planetenträger 5 fest verbunden sind. Die Lagerung der Planetenräder 4 auf dem jeweiligen Planetenbolzen 6 erfolgt über Radialgleitlager 7 und ein Axiallager 8.

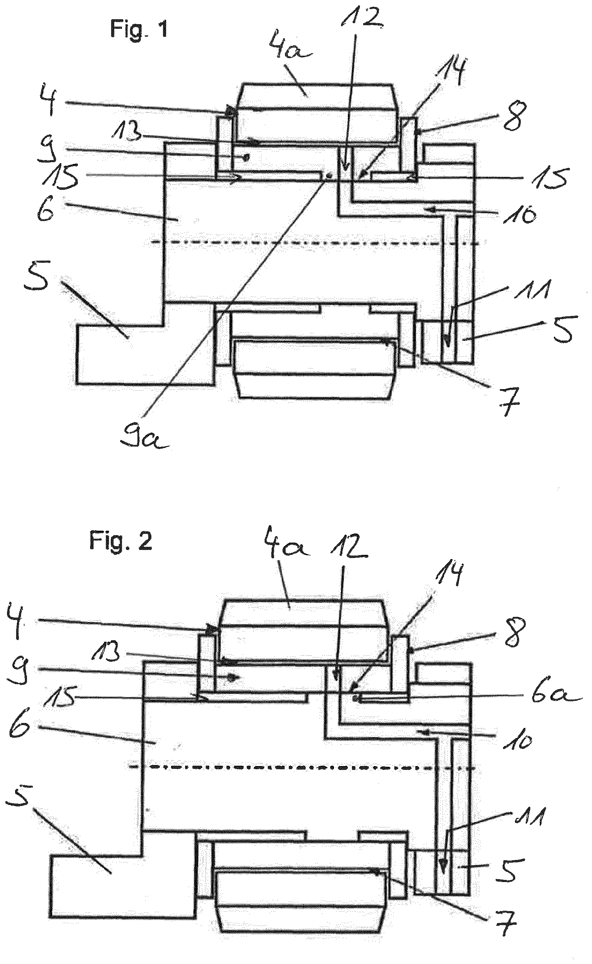

Fig. 1 zeigt einen Ausschnitt von einem ersten erfindungsgemäßen Getriebe, nämlich im Bereich eines Planetenrads 4 einer Umlaufplanetengetriebeanordnung 1 des Getriebes, wobei das Planetenrad 4 auf dem Planetenträger 5 gelagert ist, nämlich auf dem jeweiligen drehfest mit dem Planetenträger 4 befestigten Planetenbolzen 6, der sich beidseitig durch Öffnungen im Planetenträger 5 erstreckt. Wie bereits ausgeführt, handelt es sich beim Planetenträger 5 um eine drehend angetriebene Baugruppe, mit welcher der in Fig. 1 gezeigte Planetenbolzen 6 drehfest verbunden ist und demnach zusammen mit dem Planetenträger 5 im Betrieb rotiert. Das in Fig. 1 gezeigte Planetenrad 4 verfügt über eine Planetenradverzahnung 4a, die mit Verzahnungen 2a, 3a des Sonnenrads 2 sowie des Hohlrads 3 der Umlaufplanetengetriebeanordnung 1 in Eingriff steht.

Das in Fig. 1 gezeigte Planetenrad 4 ist auf dem in Fig. 1 gezeigten Planetenbolzen 6 über das Radialgleitlager 7 drehbar gelagert, wobei das Radialgleitlager 7 eine drehfest mit dem Planetenbolzen 6 verbundene Lagernabe 9 aufweist. Im in Fig. 1 gezeigten Ausführungsbeispiel sind sowohl in den Planetenträger 5 als auch in den Planetenbolzen 6 Ausnehmungen 10, 11 eingebracht, die als Führungskanäle für Schmieröl dienen, welches über eine entsprechende Ausnehmung 12 der Lagernabe 9 einem Schmierspalt 13 zwischen der Lagernabe 9 und dem Planetenrad 4 zugeführt werden kann.

Das Planetenrad 4 kann sich relativ zum Planetenbolzen 6 sowie relativ zu der drehfest mit dem Planetenbolzen 6 verbundenen Lagernabe 9 drehen. Die Axiallagerung des Planetenrads 4 auf den Planetenbolzen 6 übernimmt das jeweilige Axiallager 8.

Zwischen der Lagernabe 9 des Radialgleitlagers 7 und dem Planetenbolzen 6 ist eine ringförmige Abstützung 14 ausgebildet, die in Umfangsrichtung umläuft. In Axialrichtung gesehen weist diese ringförmige Abstützung 14 eine geringere Abmessung als die Lagernabe 9 und/oder eine geringere Abmessung als die Planetenradverzahnung 4a auf. Im gezeigten, bevorzugten Ausführungsbeispiel ist die axiale Abmessung der in Umfangsrichtung umlaufenden, ringförmigen Abstützung 14 geringer als die axiale Erstreckung der Lagernabe 9 sowie geringer als die axiale Erstreckung des Planetenrads 4 und damit der Planetenradverzahnung 4a.

In Axialrichtung gesehen ist demnach zu beiden Seiten der ringförmigen Abstützung 14 zwischen Planetenbolzen 6 und Lagernabe 9 ein Spalt 15 ausgebildet. Unter Ausnutzung dieses Spalts 15 kann sich die Lagernabe 9 bedingt durch im Betrieb auf dieselbe einwirkende Kräfte und Momente elastisch verformen. Die Lagernabe 9 ist demnach radial flexibel und drehfest auf dem Planetenbolzen 6 angeordnet.

Im in Fig. 1 gezeigten Ausführungsbeispiel ist die ringförmige Abstützung 14, bezogen auf die axiale Abmessung der Lagernabe 9 sowie die axiale Abmessung der Planetenradverzahnung 4a außermittig ausgebildet. Dies ist zur Optimierung der Lastverteilung in den im Eingriff stehenden Verzahnungen und in dem Radialgleitlager besonders bevorzugt.

Im in Fig. 1 gezeigten Ausführungsbeispiel wird die ringförmige Abstützung 14 durch einen in Umfangsrichtung umlaufenden Vorsprung 9a der Lagernabe 9 bereitgestellt, der an einer vom Planetenrad 4 abgewandten Seite der Lagernabe 9 ausgebildet ist und der sich auf einer Außenkontur des Planetenbolzens 6 abstützt.

Demgegenüber zeigt Fig. 2 eine Variante, in welcher die ringförmige Abstützung 14 von einem in Umfangsrichtung umlaufenden Vorsprung 6a des Planetenbolzens 6 ausgebildet ist, der sich, bezogen auf die radial äußere Umfangsfläche des Planetenbolzens 6 nach radial außen in Richtung auf die Lagernabe 9 erstreckt und sich auf der Lagernabe 9 abstützt.

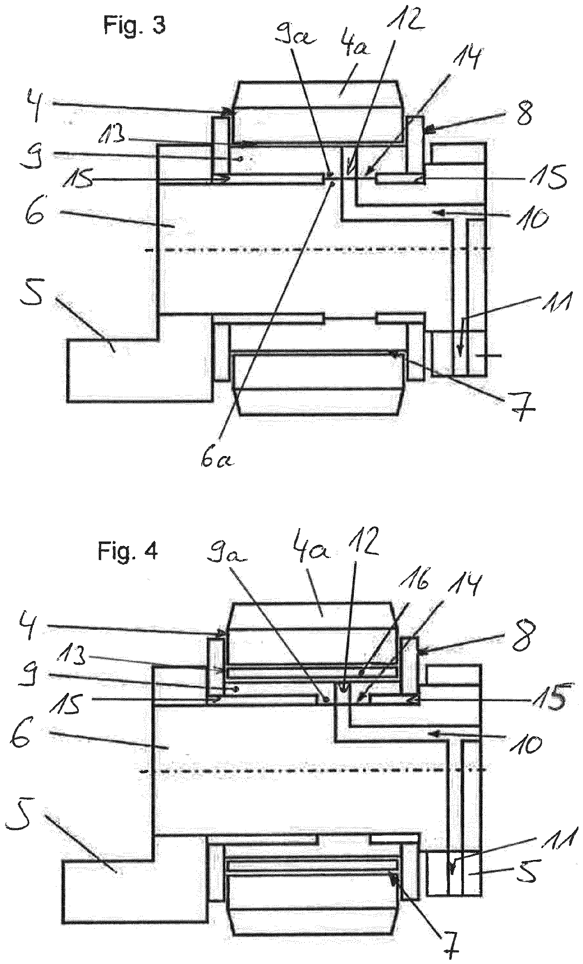

Im Ausführungsbeispiel der Fig. 3 weist sowohl Lagernabe 9 den sich nach radial innen erstreckenden Vorsprung 9a sowie Planetenbolzen 6 den sich nach radial außen erstreckenden Vorsprung 6a auf, wobei sich diese beiden in Umfangsrichtung umlaufenden Vorsprünge 9a, 6a aufeinander abstützen und gemeinsam die ringförmige Abstützung 14 zwischen Lagernabe 9 und Planetenbolzen 6 bereitstellen.

Hinsichtlich aller übrigen Details stimmen die Ausführungsbeispiele der Fig. 2, 3 mit dem Ausführungsbeispiel der Fig. 1 überein, sodass zur Vermeidung unnötiger Wiederholungen für gleiche Baugruppen gleiche Bezugsziffern verwendet werden und auf die Ausführungen zum Ausführungsbeispiel der Fig. 1 verwiesen wird.

Im Ausführungsbeispielen der Fig. 1, 2 und 3 verfügt die Lagernabe 9 an der dem Planetenrad 4 zugewandten Seite vorzugsweise eine Beschichtung aus einem Gleitlagerwerkstoff. Alternativ ist die Lagernabe 9 vollständig aus einem Gleitlagerwerkstoff gefertigt.

Fig. 4 zeigt eine weitere Variante eines erfindungsgemäßen Getriebes, wobei in Fig. 4 zwischen der Lagernabe 9 und dem Planetenrad 4 eine Schwimmbuchse 16 positioniert ist, die sowohl relativ zur Lagernabe 9 als auch zum Planetenrad 4 drehbeweglich ist. Vorzugsweise wird die Schwimmbuchse aus einem Gleitlagerwerkstoff ausgeführt.

In diesem Fall kann auf eine Beschichtung der Lagernabe 9 mit einem Gleitlagerwerkstoff oder auf die Ausführung der Lagernabe 9 aus einem Gleitlagerwerkstoff unter Umständen verzichtet werden.

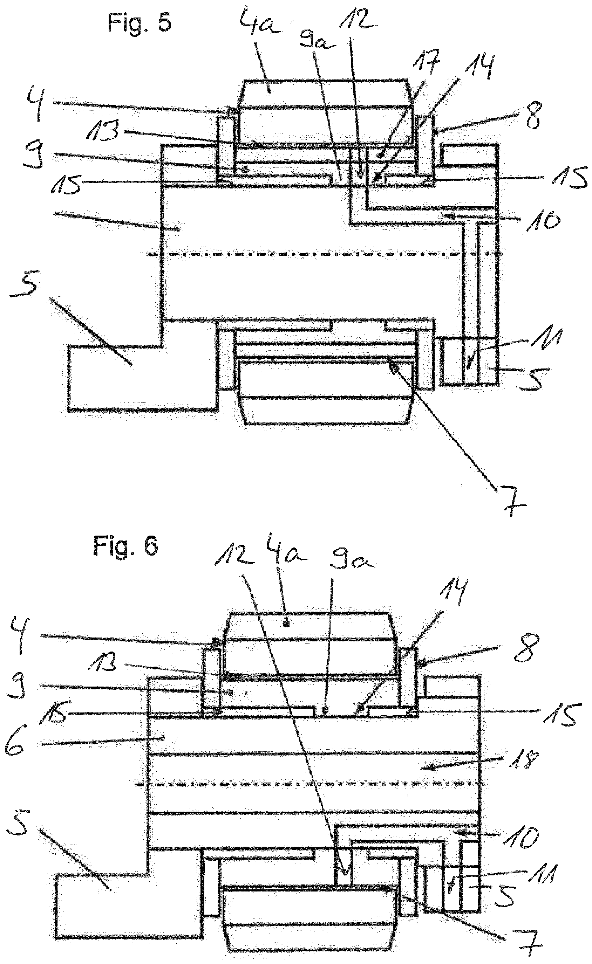

Fig. 5 zeigt eine Ausbildung eines erfindungsgemäßen Getriebes, bei welchem zwischen dem Planetenrad 1 und der Lagernabe 2 eine Gleitlagerbuchse 17 positioniert ist, die im gezeigten Ausführungsbeispiel drehfest mit der Lagernabe 9 verbunden ist. Diese Gleitlagerbuchse 17 ist dann vorzugsweise aus einem Gleitlagerwerkstoff gefertigt oder verfügt über eine Beschichtung aus einem Gleitlagerwerkstoff an einer dem Planetenrad 4 zugewandten Seite.

Im Unterschied zu dem in Fig. 5 gezeigten Ausführungsbeispiel ist es auch möglich, dass eine Gleitlagerbuchse mit dem Planetenrad 4 drehfest verbunden ist.

Hinsichtlich übriger Details stimmen die Ausführungsbeispiele der Fig. 4, 5 wiederum mit dem Ausführungsbeispiel der Fig. 1 überein, sodass auch hier zur Vermeidung unnötiger Wiederholungen für gleiche Baugruppen gleiche Bezugsziffern verwendet werden.

Fig. 6 zeigt eine Ausgestaltung eines erfindungsgemäßen Getriebes, und zwar eine Weiterbildung des Ausführungsbeispiels der Fig. 1, wobei in Fig. 6 in den Planetenbolzen 6 eine sich in Axialrichtung erstreckende Ausnehmung 18 eingebracht ist. Über diese Ausnehmung 18 kann der Planetenbolzen 6 flexibel bzw. weich und leicht ausgeführt werden.

Obwohl in Fig. 6 nicht gezeigt, kann die Ölversorgung des Radialgleitlagers 7 in Fig. 6 über die Ausnehmung 18 erfolgen.

In Fig. 6 erstreckt sich die Ausnehmung 18 axial vollständig durch den Planetenbolzen 6 hindurch. Es ist auch möglich an einer Seite oder an beiden Seiten jeweils eine Ausnehmung auszubilden, sich in Axialrichtung abschnittsweise in den Planetenbolzen 6 hinein erstreckt.

Allen Ausführungsbeispielen ist demnach gemeinsam, dass die Lagernabe 9 sich über eine ringförmige Abstützung 14 am Planetenbolzen 6 radial flexibel abstützt und mit dem Planetenbolzen 6 drehfest verbunden ist. Vorzugsweise ist dabei die Abstützung 14, bezogen auf die axiale Breite der Lagernabe 9 sowie bezogen auf die axiale Breite des Planetenrads 4 außermittig ausgebildet, vorzugsweise über einen nach radial innen gerichteten Vorsprung 9a der elastisch verformbaren Lagernabe 9 und/oder einen radial nach außen gerichteten Vorsprung 6a des Planetenbolzens 6. Unter Belastung steht die Planetenradverzahnung 4a des jeweiligen Planetenrads 4 optimal mit der Sonnenradverzahnung 2a sowie der Hohlradverzahnung 3a in Eingriff, hierdurch kann eine weitestgehend optimierte Lastverteilung in den Verzahnungseingriffen und im Radialgleitlager in unterschiedlichen Betriebszuständen gewährleistet werden. Belastungsbedingte Verformungen von Planetenbolzen 6 und/oder Planetenrad 4 und/oder Planetenträger 5 können ausgeglichen werden.

### Bezugszeichenliste

- 1: Umlaufplanetengetriebeanordnung
- 2: Sonnenrad
- 2a: Sonnenradverzahnung
- 3: Hohlrad
- 3a: Hohlradverzahnung
- 4: Planetenrad
- 4a: Planetenradverzahnung
- 5: Planetenträger
- 6: Planetenbolzen
- 6a: Vorsprung
- 7: Radialgleitlager
- 8: Axiallager
- 9: Lagernabe
- 9a: Vorsprung
- 10: Ausnehmung
- 11: Ausnehmung
- 12: Ausnehmung
- 13: Schmierspalt
- 14: Abstützung
- 15: Spalt
- 16: Schwimmbuchse
- 17: Gleitlagerbuchse
- 18: Ausnehmung
- 19: Gehäuse

## Patentansprüche

1. Getriebe insbesondere für Windkraftgeneratoren,
mit einer Umlaufplanetengetriebeanordnung (1) aus einem Sonnenrad (2), einem Hohlrad (3), mehreren Planetenrädern (4) und einem Planetenträger (5), wobei die Planetenräder (4) eine Planetenradverzahnung (4a) aufweisen, die mit einer Sonnenradverzahnung (2a) und einer Hohlradverzahnung (3a) in Eingriff steht,
mit Radialgleitlagern (7), wobei jedes Planetenrad (4) auf einem mit dem Planetenträger (5) drehfest verbundenen Planetenbolzen (6) über jeweils ein Radialgleitlager (7) drehbar gelagert ist, und wobei jedes Radialgleitlager (7) eine zwischen dem jeweiligen Planetenbolzen (6) und dem jeweiligen Planetenrad (4) positionierte Lagernabe (9) aufweist, die mit dem Planetenbolzen (6) drehfest verbunden ist,
wobei zwischen der jeweiligen Lagernabe (9) und dem jeweiligen Planetenbolzen (6) eine ringförmige Abstützung (14) ausgebildet ist, die in Axialrichtung gesehen eine geringere Abmessung als die jeweiligen Lagernabe (9) und/oder eine geringere Abmessung als die Planetenradverzahnung (4a) des jeweiligen Planetenrads (4) aufweist; und **dadurch gekennzeichnet, dass sich in Axialrichtung gesehen demnach zu beiden Seiten der ringförmigen Abstützung (14) zwischen Planetenbolzen (6) und Lagernabe (9) ein Spalt (15) ausbildet und unter Ausnutzung dieses Spalts (15) sich die Lagernabe (9) bedingt durch im Betrieb auf dieselbe einwirkende Kräfte und Momente elastisch verformen kann.**

2. Getriebe nach Anspruch 1, **dadurch gekennzeichnet, dass** die ringförmige Abstützung (14) bezogen auf die axiale Abmessung der jeweiligen Lagernabe (9) und/oder der Planetenradverzahnung (4a) des jeweiligen Planetenrads (4) außermittig ausgebildet ist.

3. Getriebe nach Anspruch 1 oder 2, **dadurch gekennzeichnet, dass** die ringförmige Abstützung (14) durch einen in Umfangsrichtung umlaufenden Vorsprung (9a) der jeweiligen Lagernabe (9) ausgebildet ist, der sich am jeweiligen Planetenbolzen (6) abstützt.

4. Getriebe nach einem der Ansprüche 1 bis 3, **dadurch gekennzeichnet, dass** die ringförmige Abstützung (14) durch einen in Umfangsrichtung umlaufenden Vorsprung (6a) des jeweiligen Planetenbolzens (6) ausgebildet ist, der sich an der jeweiligen Lagernabe (9) abstützt.

5. Getriebe nach einem der Ansprüche 1 bis 4, **dadurch gekennzeichnet, dass** zwischen der jeweiligen Lagernabe (9) und dem jeweiligen Planetenrad (4) eine Schwimmbuchse (16) positioniert ist, die gegenüber der jeweiligen Lagemabe (9) und dem jeweiligen Planetenrad (4) drehbeweglich ist.

6. Getriebe nach einem der Ansprüche 1 bis 5, **dadurch gekennzeichnet, dass** zwischen der jeweiligen Lagernabe (9) und dem jeweiligen Planetenrad (4) eine Gleitlagerbuchse (17) positioniert ist, die entweder mit der jeweiligen Lagemabe (9) oder mit jeweiligen Planetenrad (4) drehfest verbunden ist.

7. Getriebe nach einem der Ansprüche 1 bis 6, **dadurch gekennzeichnet, dass** in den jeweiligen Planetenbolzen (6) mindestens eine sich in Axialrichtung erstreckende Ausnehmung (18) eingebracht ist.

8. Getriebe nach Anspruch 7, **dadurch gekennzeichnet, dass** über die jeweilige Ausnehmung (18) eine Ölversorgung des jeweiligen Radialgleitlagers (7) erfolgt.

9. Getriebe nach einem der Ansprüche 1 bis 8, **gekennzeichnet durch** Axiallager (8) zur axialen Lagerung des jeweiligen Planetenrads (4) auf der jeweiligen Lagernabe (9).

## Claims

1. A transmission in particular for wind power generators,
having a planetary gear assembly (1) of a sun gear (2), an internal gear (3), multiple planet gears (4) and a planet carrier (5), wherein the planet gears (4) have a planet gear toothing (4a), which is in engagement with a sun gear toothing (2a) and an internal gear toothing (3a),
having radial sliding bearings (7), wherein each planet gear (4) is rotatably mounted on a planet pin (6) that is non-rotatably connected to the planet carrier (5) via a radial sliding bearing (7) each, and wherein each radial sliding bearing (7) comprises a bearing hub (9) positioned between the respective planet pin (6) and the respective planet gear (4), which is non-rotatably connected to the planet pin (6),
wherein between the respective bearing hub (9) and the respective planet pin (6) an annular support (14) is formed, which seen in the axial direction, has a smaller dimension than the respective bearing hub (9) and/or a smaller dimension than the planet gear toothing (4a) of the respective planet gear (4); and **characterized in that**
seen in the axial direction a gap (15) accordingly forms on both sides of the annular support (14) between planet pin (6) and bearing hub (9) and, utilising this gap (15), the bearing hub (9), caused by the forces and moments acting on the same during the operation, can deform elastically.

2. The transmission according to Claim 1, **characterized in that** the annular support (14), based on the axial dimension of the respective bearing hub (9) and/or the planet gear toothing (4a) of the respective planet gear (4), is formed out of centre.

3. The transmission according to Claim 1 or 2, **characterized in that** the annular support (14) is formed by a projection (9a) of the respective bearing hub (9) circulating in the circumferential direction, which is supported on the respective planet pin (6).

4. The transmission according to any one of the Claims 1 to 3, **characterized in that** the annular support (14) is formed by a projection (6a) of the respective planet pin (6) circulating in the circumferential direction, which is supported on the respective bearing hub (9).

5. The transmission according to any one of the Claims 1 to 4, **characterized in that** between the respective bearing hub (9) and the respective planet gear (4) a floating bush (16) is positioned, which is rotatable relative to the respective bearing hub (9) and the respective planet gear (4).

6. The transmission according to any one of the Claims 1 to 5, **characterized in that** between the respective bearing hub (9) and the respective planet gear (4) a sliding bearing bush (17) is positioned, which is non-rotatably connected either to the respective bearing hub (9) or to the respective planet gear (4).

7. The transmission according to any one of the Claims 1 to 6, **characterized in that** in the respective planet pin (6) at least one recess (18) extending in the axial direction is introduced.

8. The transmission according to Claim 7, **characterized in that** via the respective recess (18) an oil supply of the respective radial sliding bearing (7) is effected.

9. The transmission according to any one of the Claims 1 to 8, **characterized by** axial bearings (8) for axially mounting the respective planet gear (4) on the respective bearing hub (9).

## Revendications

1. Engrenage, en particulier pour les installations éoliennes,
comportant un engrenage planétaire (1) constitué d'une roue solaire (2), une couronne (3), plusieurs satellites (4) et un porte-satellites (5), dans lequel les satellites (4) présentent une denture d'engrenage planétaire (4a), qui vient en prise avec une denture d'engrenage planétaire (2a) et une denture d'engrenage annulaire (3a),
comportant des paliers lisses radiaux (7), dans lequel chaque engrenage planétaire (4) est positionné rotativement sur un axe planétaire (6) relié au porte-satellites (5) d'une manière solidaire en rotation via un palier à glissement radial (7), et dans lequel chaque palier à glissement radial (7) présente un moyeu de palier (9) positionné entre l'axe planétaire respectif (6) et l'engrenage planétaire respectif (4) qui est relié de manière solidaire en rotation à la broche planétaire (6),
dans lequel entre le moyeu de palier respectif (9) et l'axe planétaire respectif (6) est réalisé un support annulaire (14) qui, vu dans la direction axiale, a une dimension plus petite que le moyeu de palier respectif (9) et/ou une dimension plus petite que les dents d'engrenage planétaire (4a) de l'engrenage planétaire respectif (4); et **caractérisé en ce que**
vu dans la direction axiale en conséquence des deux côtés du support annulaire (14) entre l'axe planétaire (6) et le moyeu de roulement (9) un interstice (15) est formé et en tirant profit de cet interstice (15), le moyeu de palier (9) peut être déformé élastiquement du fait des forces et moments agissant sur lui pendant le fonctionnement.

2. Transmission selon la revendication 1, **caractérisée en ce que** le support annulaire (14) est conçu de manière excentrique par rapport à la dimension axiale du moyeu de palier respectif (9) et/ou des dents d'engrenage planétaire (4a) de l'engrenage planétaire respectif (4).

3. Transmission selon la revendication 1 ou 2, **caractérisée en ce que** le support annulaire (14) est formé par une saillie circonférentielle (9a) du moyeu de palier respectif (9), qui prend appui sur l'axe planétaire respectif (6).

4. Transmission selon une des revendications 1 à 3, **caractérisée en ce que** le support annulaire (14) est formé par une saillie s'étendant dans la direction circonférentielle (6a) de l'axe planétaire respectif (6), qui prend appui sur le moyeu de palier respectif (9).

5. Transmission selon une des revendications 1 à 4, **caractérisée en ce qu'**une douille flottante (16) est positionnée entre le moyeu de palier respectif (9) et l'engrenage planétaire respectif (4), qui est mobile rotativement en regard du moyeu de palier respectif (9) et de l'engrenage planétaire respectif (4).

6. Transmission selon une des revendications 1 à 5, **caractérisée en ce qu'**entre le moyeu de palier respectif (9) et l'engrenage planétaire respectif (4) est positionnée une douille de palier lisse (17), qui est reliée en rotation soit avec le moyeu de palier respectif (9) soit avec l'engrenage planétaire respectif (4).

7. Transmission selon une des revendications 1 à 6, **caractérisée en ce que** dans l'axe planétaire respectif (6) au moins un évidement (18) s'étendant dans la direction axiale est ménagé.

8. Transmission selon la revendication 7, **caractérisée en ce qu'**une alimentation en huile vers le palier lisse radial respectif (7) a lieu via l'évidement respectif (18).

9. Transmission selon une des revendications 1 à 8, **caractérisée par** des paliers axiaux (8) pour le positionnement axial de l'engrenage planétaire respectif (4) sur le moyeu de palier respectif (9) .
